# EUROPÄISCHE PATENTSCHRIFT

(11) **EP 2 607 154 B1**
(45) Veröffentlichungstag und Bekanntmachung des Hinweises auf die Patenterteilung: **19.08.2015**
(21) Anmeldenummer: 12197436.4
(22) Anmeldetag: 17.12.2012
(51) Int. Cl.: B60N 2/56, B60N 2/58, B60N 2/70

(54) **Fahrzeugsitz mit Polsterteil mit Nahtbereich**
Vehicle seat with cushion with seam area
Siège de véhicule avec pièce de rembourrage dotée d'une zone de couture

(30) Priorität: 22.12.2011 DE 102011122011
(43) Veröffentlichungstag der Anmeldung: 26.06.2013
(73) Patentinhaber: GRAMMER AG, 92224 Amberg (DE)
(72) Erfinder: Überlacker, Roland, 92536 Pfreimd (DE); Herbst, Gerald, 92237 Sulzbach-Rosenberg (DE)
(74) Vertreter: Hannke, Christian

(56) Entgegenhaltungen:
- WO-A1-95/14409
- DE-A1-102004 001 912
- DE-A1-102007 055 034
- DE-A1-102008 061 594
- DE-U1-202007 002 196
- FR-A1- 2 897 023
- US-A1- 2006 175 877

## Beschreibung

Die Erfindung betrifft einen Fahrzeugsitz mit einem Sitzteil, mit einem Rückenlehnenteil und mit einem Polsterteil zum Polstern einer Sitzfläche des Sitzteils, bei welchem das Polsterteil eine Polsterbezugeinrichtung, eine Polsterungseinrichtung, eine Sperrschichtlage sowie ein Hauptpolsterelement umfasst, und bei welchem das Hauptpolsterelement durch die Sperrschichtlage von der Polsterbezugeinrichtung und der Polsterungseinrichtung räumlich getrennt angeordnet ist.

Gattungsgemäße Fahrzeugsitze und diesbezügliche Fahrzeugsitzpolsterteile sind aus dem Stand der Technik vielfältig und gut bekannt. Bei diesen bekannten Fahrzeugsitzpolsterteilen sind ein Polsterbezugelement und ein Polsterelement oftmals mit einer Sperrschichtfolie kaschiert, welche an ihrer dem Polsterelement abgewandten Seite noch mit einer zusätzlichen Hauptpolsterung des Fahrzeugsitzes hinterformt ist, so dass insgesamt ein sehr kompakt bauendes Fahrzeugsitzpolsterteil zur Verfügung gestellt werden kann. Ein derartiges kompaktes Fahrzeugsitzpolsterteil ist bisher jedoch recht aufwendig herzustellen.

Aus der FR 2 897 023 ist ein Fahrzeugsitz gemäß dem Oberbegriff des Anspruchs 1 bekannt.

Es ist Aufgabe der vorliegenden Erfindung, gattungsgemäße Fahrzeugsitze und insbesondere gattungsgemäße Fahrzeugsitzpolsterteile derart weiterzuentwickeln, dass speziell die Herstellung von Fahrzeugsitzen insgesamt einfacher und damit auch kostengünstiger wird.

Die Aufgabe der Erfindung wird von einem Fahrzeugsitz mit einem Sitzteil, mit einem Rückenlehnenteil und mit einem Polsterteil zum Polstern einer Sitzfläche des Sitzteils gelöst, bei welchem das Polsterteil eine Polsterbezugeinrichtung, eine Polsterungseinrichtung, eine Sperrschichtlage sowie ein Hauptpolsterelement umfasst, und bei welchem das Hauptpolsterelement durch die Sperrschichtlage von der Polsterbezugeinrichtung und der Polsterungseinrichtung räumlich getrennt angeordnet ist, wobei sich der Fahrzeugsitz dadurch auszeichnet, dass die Polsterbezugeinrichtung und die Polsterungseinrichtung in Sitzrichtung gesehen quer zur Sitzfläche und entlang der Sitzfläche derart mehrteilig ausgestaltet sind, dass das Polsterteil radial außen zwei durch einen Mittenspiegelbereich voneinander beabstandete seitliche Funktionsbereiche aufweist, wobei die seitlichen Funktionsbereiche jeweils in einem Nahtbereich an dem Mittenspiegelbereich befestigt sind.

Durch diesen erfindungsgemäßen Aufbau, insbesondere des Polsterteils des Fahrzeugsitzes, gelingt es konstruktiv einfach, unterschiedliche Funktionsbereiche an dem Polsterteil des Fahrzeugsitzes auszugestalten, mittels welchen es möglich ist, den Fahrzeugsitz innovativ und sehr kostengünstig zu polstern.

Der Begriff "Polsterteil" beschreibt im Sinne der Erfindung eine Einrichtung, mittels welcher der Fahrzeugsitz gepolstert werden kann. Insofern kann das Polsterteil an dem Sitzteil und/oder an dem Rückenlehnenteil vorgesehen sein, um den Sitzkomfort für einen Benutzer des Fahrzeugsitzes komfortabler zu gestalteten. Das vorliegende Polsterteil wird vorzugsweise zumindest immer am Sitzteil vorgesehen.

Der Begriff "Polsterungskernelement" beschreibt vorliegend einen weiteren Funktionsbereich bzw. eine weitere Komponente des Polsterteils, durch welchen bzw. durch welche eine besonders gute Härteabstimmung am Polsterteil, und zwar sowohl an dem Sitzteil als auch an dem Rückenlehnenteil des Fahrzeugsitzes, erzielt werden kann.

Eine vorteilhafte Weiterbildung der Erfindung sieht vor, dass es vorteilhaft ist, wenn die mehrteilige Polsterbezugeinrichtung ein Polsterbezugmittenelement und in Sitzrichtung gesehen radial außen hierzu zwei seitlich angeordnete Polsterbezugseitenelemente umfasst, welche mit dem Polsterbezugmittenelement jeweils an den Nahtbereichen fest verbunden sind, wobei das Polsterbezugmittenelement von einem Polsterungskernelement der Polsterungseinrichtung und die Polsterbezugseitenelemente jeweils von einem Polsterungsseitenelement der Polsterungseinrichtung unterbaut sind. Hierdurch kann der konstruktive Aufbau des Polsterteils weiter erheblich vereinfacht werden.

Darüber hinaus ist es vorteilhaft, wenn das Polsterungskernelement und die Polsterungsseitenelemente an ihrer der mehrteiligen Polsterbezugeinrichtung abgewandten Seite jeweils ein Sperrschichtlagenelement aufweisen, wobei die Sperrschichtlagenelemente an den Nahtbereichen jeweils mit entlang den Nahtbereichen verlaufenden Abdichtungsstreifenelementen miteinander verbunden sind. Mittels der Abdichtungsstreifenelemente kann betriebssicher eine dauerhafte Verbindung zwischen den einzelnen Sperrschichtlagenelementen erzielt werden.

Vorteilhafter Weise ist das Polsterungskernelement aus einem relativ offenporigen und damit auch sehr gut luftdurchlässigen Material realisiert, wodurch insbesondere im Bereich der direkten Sitzfläche, also dem Mittenspiegelbereich des Sitzteils und/oder des Rückenlehnenteils, eine besonders gute Atmungsaktivität am Fahrzeugsitz erzielt werden kann.

Vorzugsweise umfasst das Polsterungskernelement einen Schnittschaum, einen retikulierten Schaum oder ein Abstandsgewirke, sodass es konstruktiv einfach mit guten Luftdurchlässigkeitseigenschaften realisiert werden kann.

Insofern handelt es sich bei dem vorliegenden Polsterungskernelement vorzugsweise um ein im Wesentlichen gut luftdurchlässiges Polsterungskernelement.

Vorteilhaft ist es, wenn das insbesondere luftdurchlässige Polsterungskernelement einstückig und nur partiell in dem Polsterteil integriert ist, sodass nicht zwingend die gesamte Sitzfläche des Fahrzeugsitzes mit dem Polsterungskernelement unterlegt ist. Vorzugsweise erstreckt sich das vorliegende Polsterungskernelement in Längserstreckung des Sitzteils und/oder des Rückenlehnenteils in etwa mittig der Sitzfläche des Sitzteils und/oder des Rückenlehnenteils. Hierdurch können die Herstellungskosten weiter reduziert werden.

Der Sitzkomfort kann hierbei zusätzlich je nach Einsatzzweck und Beanspruch des Fahrzeugsitzes vorteilhaft eingestellt werden, wenn das Polsterungskernelement zudem eine Dicke zwischen einschließlich 3 mm und einschließlich 50 mm, vorzugsweise eine Dicke zwischen einschließlich 15 mm und einschließlich 25 mm, und idealerweise eine Dicke zwischen einschließlich 20 mm und einschließlich 25 mm aufweist.

Es hat sich herausgestellt, dass es zudem vorteilhaft ist, wenn das Polsterungskernelement eine Dicke aufweist, welche mehr als das Doppelte, vorzugsweise mehr als das Dreifache, der Dicke des verwendeten Polsterungsseitenelemente beträgt, da hierdurch eine besonders vielfältige Härteabstimmung im Bereich des Polsterungskernelements erzielt werden kann.

Darüber hinaus ist es vorteilhaft, wenn die Dicke des Polsterungskernelements weniger als dreiviertel, vorzugsweise die Hälfte oder weniger, der Dicke des Hauptpolsterelements beträgt. Hierdurch kann sichergestellt werden, dass dem Polsterteil durch ein ausreichend hohes bzw. dickes Hauptpolsterelement insgesamt noch eine gute Festigkeit und damit eine genügend große Widerstandsfähigkeit und Formstabilität selbst bei hoher Belastung innewohnt, da das Polsterungskernelement aufgrund seiner größeren Offenporigkeit weicher ausgelegt ist als das Material des Hauptpolsterelements.

Die Dicken des Polsterungskernelements, der Polsterungsseitenelemente und des Hauptpolsterelements werden im Wesentlichen senkrecht zur Polsterbezugeinrichtung bzw. im Wesentlichen senkrecht zur planen Sitzfläche im Mittenspiegelbereich gemessen.

Insofern sieht eine bevorzugte Ausführungsvariante vor, dass das luftdurchlässige Polsterungskernelement einen offenporigeren Materialkörper als das Hauptpolsterelement umfasst.

Mit dem Begriff "Hauptpolsterelement" wird vorliegend jegliche Einrichtung erfasst, mittels welcher das Sitzteil bzw. das Rückenlehnenteil mit einer Grundpolsterung großflächig bedeckt und gepolstert werden kann. In der Regel wird das Hauptpolsterelement aus einem Reaktionsgemisch, etwa als Kaltschaumbauteil, erzeugt. Es kann jedoch auch aus anderen Materialien hergestellt sein, die sich gut an die Sperrschichtlage anbringen lassen. Insbesondere kann das Hauptpolsterelement auch sehr gut als Heißschaumpolster oder als Vakuumhinterschäumung realisiert sein.

Um bei einem Hinterschäumen insbesondere des luftdurchlässigen Polsterungskernelements verhindern zu können, dass ein hierbei eingesetztes Reaktionsgemisch unbeabsichtigt in Poren des luftdurchlässigen Polsterungskernelements oder der Polsterungsseitenelemente gelangen kann, ist es vorteilhaft, wenn das Polsterungskernelement von dem Hauptpolsterelement durch die Sperrschichtlage räumlich getrennt ist.

Eine besonders vorteilhafte Ausführungsvariante sieht einen weiter strukturierten Aufbau des Polsterteils vor, bei welchem ein Polsterbezugmittenelement der mehrteiligen Polsterbezugeinrichtung und radial außen hierzu seitlich angeordneten Polsterbezugseitenelemente der mehrteiligen Polsterbezugeinrichtung an den jeweiligen Nahtbereichen zumindest teilweise in etwa rechtwinkelige zu der Sitzfläche und parallel zueinander verlaufend einander anliegend angeordnet sind, wobei das Polsterbezugmittenelement und die Polsterbezugseitenelemente in den jeweiligen Nahtbereichen miteinander vernäht oder miteinander thermisch verschweißt sind.

Durch diesen strukturierten Aufbau können die einzelnen Polsterungselemente der Polsterungseinrichtung bereits schon während der Herstellung des Polsterteils besser gegenüber der mehrteiligen Polsterbezugeinrichtung vorpositioniert werden, so dass sich der Herstellungsprozess insgesamt noch betriebssicherer durchführen lässt.

Speziell für das thermische Verschweißen des Polsterbezugmittenelementes mit den Polsterbezugseitenelementen eignet sich eine Ultraschallverschweißung sehr gut. Es versteht sich, dass jedoch auch andere Füge- bzw. Verbindungstechniken zum Einsatz kommen können, um die einzelnen Elemente der mehrteiligen Polsterbezugeinrichtung dauerhaft und langlebig miteinander verbinden zu können.

Darüber hinaus ist es vorteilhaft, wenn ein Polsterbezugmittenelement der mehrteiligen Polsterbezugeinrichtung auf Seiten der Sperrschichtlage in etwa u-förmig ausgestaltet ist und einen der Sperrschichtlage zugewandten rinnenartigen Einlegebereich ausgestaltet, in welchem ein Polsterungskernelement der mehrteiligen Polsterungseinrichtung angeordnet ist. Durch diesen rinnenartig ausgestalteten Einlegebereich können die Polsterungselemente der Polsterungseinrichtung noch definierter gegenüber der mehrteiligen Polsterbezugeinrichtung platziert werden.

Hierbei ist es vorteilhaft, wenn die aus dem Polsterbezugmittenelement und aus den Polsterbezugseitenelementen zusammengesetzte mehrteilige Polsterbezugeinrichtung in eine Werkzeugform derart eingelegt wird, dass anschließend das Polsterungskernelement in den rinnenartigen Einlegebereich eingelegt und auf das Polsterbezugmittenelement aufkaschiert werden kann. Entsprechend werden die Polsterungsseitenelemente seitlich an den rinnenartigen Einlegebereich angeordnet und an den jeweiligen Polsterbezugseitenelementen aufkaschiert, so dass die mehrteilige Polsterbezugeinrichtung vorteilhaft durch die Polsterungseinrichtung unterbaut ist.

Seitlich von dem Polsterungskernelement angeordnete Funktionsbereiche des Polsterteils können vorteilhaft weiterentwickelt werden, wenn die Polsterungsseitenelemente jeweils eine Dicke aufweisen, welche geringer ist als die Dicke des Polsterungskernelements.

Insbesondere hierdurch weist das Polsterteil radial außen seitlich angeordnete Funktionsbereiche auf, welche vorteilhafter Weise ein höheres Biegungsvermögen und/oder ein höheres Dehnungsvermögen aufweisen als das Polsterteil im Bereich des Polsterungskernelements.

Ein Bewegungsvermögen der radial außen seitlich angeordneten Funktionsbereiche kann nochmals verbessert werden, wenn die Polsterbezugseitenelemente jeweils ein höheres Dehnungsvermögen aufweisen als das Polsterbezugmittenelement, wobei insbesondere die Polsterbezugseitenelemente jeweils ein Dehnungsvermögen von 40 % bis 220 %, vorzugsweise von 60 % bis 180 %, ihrer Ursprungslängen und/oder das Polsterbezugmittenelement ein Dehnungsvermögen von 1 % bis 220 %, vorzugsweise von 10 % bis 60 %, seiner Ursprungslänge aufweisen.

Sind die Polsterbezugseitenelemente sich in Längsrichtung des Sitzteils erstreckend und an bzw. oberhalb Sitzflächenwangenpolsterteilen des Fahrzeugsitzes angeordnet, kann das Polsterteil insbesondere vorteilhaft über diese Sitzflächenwangenpolsterteile gezogen werden, so dass sich eine Montage des Polsterteils am Fahrzeugsitz insgesamt vereinfachen lässt.

Darüber hinaus sieht eine weitere bevorzugte Ausführungsvariante vor, dass die Polsterbezugseitenelemente ausgehend von einer im Wesentlichen planen Sitzfläche oberseitig dieser planen Sitzfläche nach schräg oben und anschließend nach unten gebogen weiter runterwärts bis unterseitig der planen Sitzfläche verlaufend angeordnet sind. Durch eine solche Anordnung können die Polsterbezugseitenelemente besonders vorteilhaft an einer Sitzteilkontur angepasst werden.

Damit das Polsterungsbezugmittenelement und die Polsterbezugseitenelemente in den Nahbereichen zwischen dem Polsterungskernelement und den Polsterungsseitenelementen vorteilhaft angeordnet werden können, sieht eine weiterführende vorteilhafte Ausführungsvariante vor, dass sowohl das Polsterungskernelement als auch die Polsterungsseitenelemente an ihren jeweils unmittelbar gegenüberliegenden Seiten jeweils eine Anlageeinrichtung aufweisen, zwischen denen das Polsterbezugmittenelement und das jeweilige Polsterbezugseitenelement zumindest teilweise angeordnet sind, wobei die jeweilige Anlageeinrichtung durch eine Materialüberhöhung an dem Polsterungskernelement bzw. an den Polsterungsseitenelementen ausgestaltet sind.

Die Herstellung des vorliegenden Fahrzeugsitzes und insbesondere dessen Polsterteil kann weiter vereinfacht werden, wenn vor dem Applizieren der Polstereinrichtung an die mehrteilige Polsterbezugeinrichtung, idealerweise sowohl die Polsterungsseitenelemente als auch das Polsterungskernelement jeweils bereits mit einem aufkaschierten Sperrschichtelement ausgerüstet sind.

Es versteht sich, dass die zum Abdichten der vorhandenen Nahtbereiche angebrachten Abdichtungsstreifenelemente in unterschiedlichster Weise auf die Sperrschichtelemente aufgebracht bzw. an diesen befestigt werden können. Verfahrenstechnisch einfach kann dies jedoch geschehen, wenn die Abdichtungsstreifenelemente mit den Sperrschichtelementen thermisch verschweißt sind. Hierbei kann auf zusätzliche Klebemittel vorteilhaft verzichtet werden.

Vorzugsweise bestehen die Sperrschichtelemente der Sperrschichtlage jeweils aus einer PU-Folie, welche idealerweise eine Stärke von 0,25 µm bis 1,5 µm aufweisen kann. Es versteht sich, dass auch andere Folienmaterialien vorteilhaft eingesetzt werden können, sofern sie ausreichend reißfest sind.

Vorteilhafter Weise kann durch die Sperrschichtlage ein Eindringen eines Reaktionsgemisches in die Poren des Polsterungskernelement und der Polsterungsseitenelemente gut verhindert werden kann.

Die mehrteilige Polsterbezugeinrichtung kann vorliegend bereichsweise ein für einen Fahrzeugsitz übliches Stoffmaterial, Ledermaterial oder dergleichen umfassen.

Vorzugsweise weisen die Polsterbezugseitenelemente der mehrteiligen Polsterbezugeinrichtung eine Dicke zwischen 0,5 mm bis 6 mm auf, so dass diese sowohl gut biegbar als auch gut dehnbar sind.

Das Polsterbezugmittenelement kann ein hiervon größere Dicke aufweisen und damit vorteilhafter Weise stärker ausgelegt sein, da es im Mittenspiegelbereich angeordnet ist und im Allgemeinen stärker belastet wird als die Polsterbezugseitenelemente.

Eine weitere sehr vorteilhafte Ausführungsvariante sieht vor, dass das Polsterteil eine Belüftungseinrichtung mit wenigstens einem Belüftungsloch umfasst, welches unterhalb des luftdurchlässigen Polsterungskernelements durch das Hauptpolsterelement hindurch bis an das vorzugsweise im Wesentlichen luftdurchlässige Polsterungskernelement oder bis wenigstens an die Sperrschichtlage des Polsterteils heranreicht. Hierdurch kann konstruktiv sehr einfach eine betriebssichere Luftzuführung bezüglich des vorzugsweise luftdurchlässigen Polsterungskernelements gewährleistet werden.

Vorteilhafter Weise sind eine Vielzahl an Belüftungslöchern vorgesehen, so dass eine besonders weiträumige und damit gute Belüftung des Polsterungskernelements erreicht werden kann.

Weist die Sperrschichtlage des Polsterteils im Bereich der Belüftungseinrichtung, insbesondere im Bereich von Belüftungslöchern der Belüftungseinrichtung, Durchbrüche auf, kann die durch die Belüftungslöcher strömende Luft auch die Sperrschichtlage ohne kritischen Widerstände passieren.

Insofern ist es außergewöhnlich vorteilhaft, wenn zwischen insbesondere dem Polsterungskernelement und dem Hauptpolsterelement eine bereichsweise durchlöcherte Sperrschichtlage angeordnet ist.

Diese Durchbrüche können durch eine geeignete Werkzeugform bereits beim Schäumen eines Reaktionsgemisches für Hauptpolsterelement oder aber erst nach dem Schäumen des Hauptpolsterelements, beispielsweise durch Brennen, Stechen, Bohren oder Fräsen, erzeugt werden.

Nach einem weiteren Aspekt der Erfindung wird deren Aufgabe auch von dem vorliegenden Verfahren zum Herstellen eines Fahrzeugsitzpolsterteils gelöst, bei welchem in das Hauptpolsterelement wenigstens ein Belüftungsloch zum Belüften des Polsterungskernelements eingebracht wird. Durch eine derartige Verfahrensweise kann das Polsterteil für den Fahrzeugsitz besonders einfach und kostengünstig verbessert und weiterentwickelt werden.

Um einen besonders guten Luftaustausch zwischen den Belüftungslöchern und dem Polsterungskernelement bzw. eine sehr gute Frischluftzufuhr zu dem Polsterungskernelement zu erzielen, kann die Sperrschichtlage an den Belüftungslöchern zusätzlich durchstoßen sein, sofern die Sperrschichtlage von Haus aus nicht ausreichend luftdurchlässig ist.

In diesem Zusammenhang wird die Aufgabe der Erfindung auch von einem gattungsgemä-βen Fahrzeugsitzpolsterteil gelöst, welches sich dadurch auszeichnet, dass das Fahrzeugsitzpolsterteil einen von einem Hauptpolsterelement verschiedenen zusätzlichen Polsterungskernelement aufweist, in dessen mittelbar angrenzenden Bereich das Hauptpolsterelement eine Belüftungseinrichtung zum Belüften des Polsterungskernelements aufweist, bei welchem idealerweise das Polsterungskernelement unmittelbar an eine Polsterbezugeinrichtung angrenzt, und das Polsterungskernelement von dem Hauptpolsterelement durch eine Sperrschichtlage räumlich getrennt ist, wobei zumindest die Sperrschichtlage an Öffnungen von Belüftungslöchern der Belüftungseinrichtung gegebenenfalls noch durchbrochen ist. Durch einen derartigen vorteilhaften Aufbau kann insbesondere das Fahrzeugsitzpolsterteil baulich und herstellungstechnisch besonders einfach bereitgestellt werden.

Nach einem weiteren Aspekt der Erfindung wird deren Aufgabe auch von einer Verwendung eines Hauptpolsterelements eines Fahrzeugsitzpolsterteils als Belüftungseinrichtung eines in der Nähe des Hauptpolsterelements angeordneten Polsterungskernelements gelöst, da zum Realisieren einer derartigen Belüftungseinrichtung, mittels welcher insbesondere dem Polsterungskernelement vorteilhaft Frischluft zugeführt wird, im Wesentlichen nur das Hauptpolsterelement erforderlich ist, wodurch vorteilhafter Weise auf zusätzliche Belüftungseinrichtungsbauteile an oder in dem Hauptpolsterelement verzichtet werden kann.

Es ist hier ausdrücklich darauf hingewiesen, dass die Merkmale der vorstehend beschriebenen Lösungen auch kombiniert werden können, um die hierzu genannten Vorteile und/oder weitere Vorteile entsprechend kumuliert umsetzen zu können.

Weitere Vorteile, Eigenschaften der vorliegenden Erfindung werden anhand anliegender Zeichnung und nachfolgender Beschreibung erläutert, in welchen beispielhaft ein Fahrzeugsitz mit einem erfindungsgemäßen Polsterteil dargestellt und beschrieben ist.

In der Zeichnung zeigen:
- Figur 1: schematisch eine teilweise geschnittene perspektivische Teilansicht eines Fahrzeugsitzes umfassend ein Polsterteil mit einer mehrteiligen Polsterbezugeinrichtung, welches mit einer mehrteiligen Polsterungseinrichtung unterbaut ist, wobei die einzelnen Polsterungselemente der Polsterungseinrichtung mit Sperrschichtlagenelementen ausgerüstet sind, die in Nahtbereichen des Polsterteils entlang dieser Nahtbereiche mit Abdichtungsstreifenelementen miteinander verschweißt sind;
- Figur 2: schematisch eine Querschnittsansicht des Polsterteils aus der Figur 1;
- Figur 3: schematisch eine Ansicht einer bevorzugten Querschnittsform eines alternativen Sitzteils; und
- Figur 4: schematisch eine Detailansicht eines der Nahtbereiche des Polsterteils aus den Figur 1 bis Figur 3.

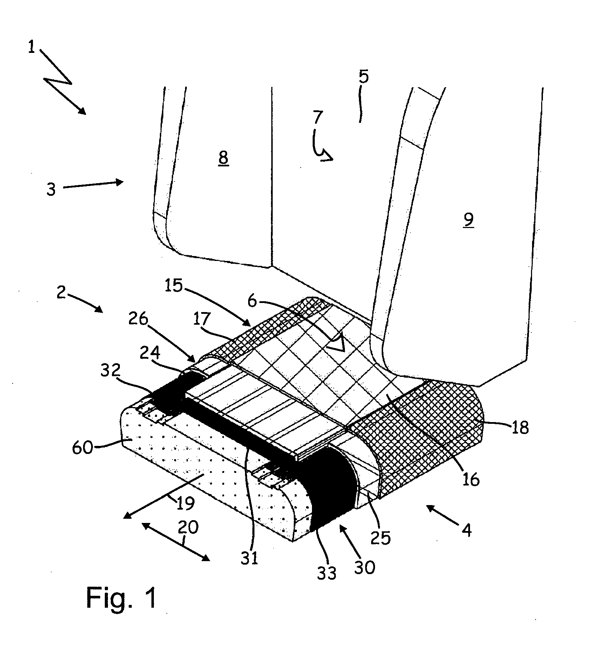

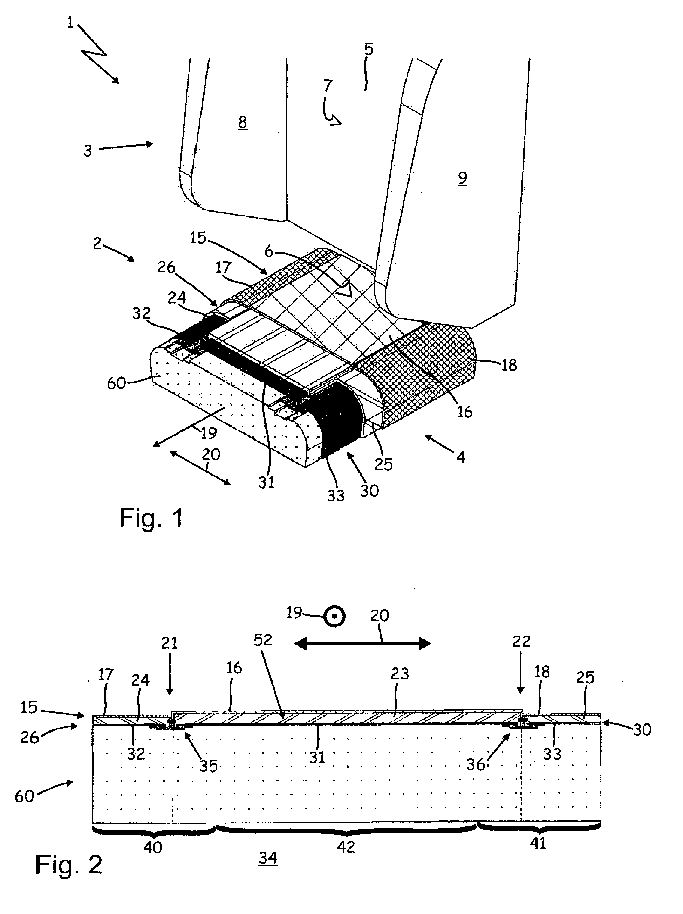

Der in der Figur 1 gezeigte Fahrzeugsitz 1 weist ein Sitzteil 2 und ein Rückenlehnenteil 3 auf. Sowohl das Sitzteil 2 als auch das Rückenlehnenteil 3 sind jeweils durch ein Polsterteil 4 bzw. 5 gepolstert und von diesem dementsprechend bedeckt.

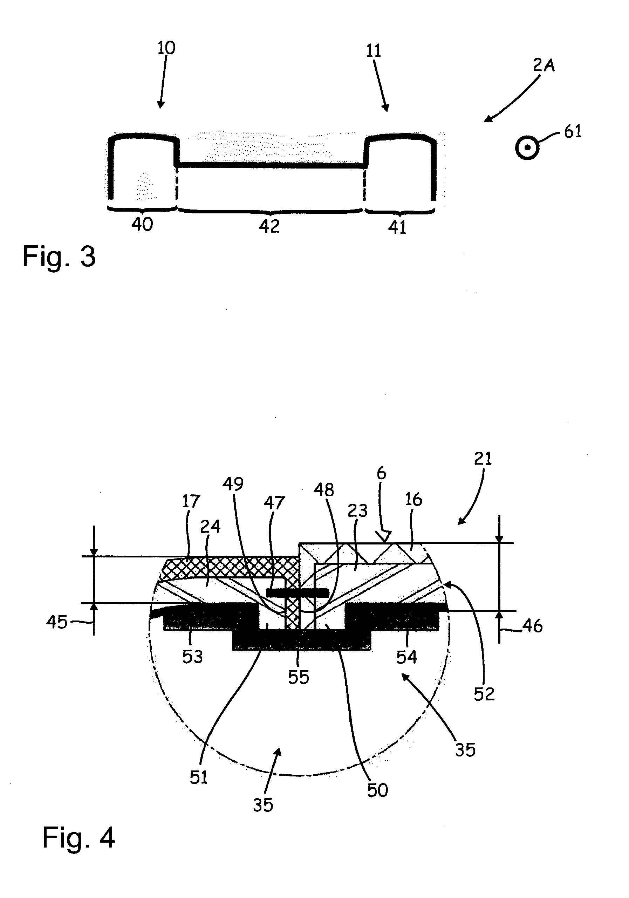

Das Polsterteil 4 gestaltet im Wesentlichen eine Sitzfläche 6 und das Polsterteil 5 im Wesentlichen eine Sitzfläche 7 des Rückenlehnenteils 3 aus. Hinsichtlich des Rückenlehnenteils 3 sind noch seitliche Wangenpolsterteile 8 und 9 dargestellt, welche hinsichtlich des Sitzteils 2 gemäß der Darstellung nach der Figur 3 als Sitzwangenpolsterteile 10 und 11 vorhanden sein können. Der strukturelle Aufbau der Polsterteile 4 und 5 wird nachstehend stellvertretend anhand des Polsterteils 4 des Sitzteils 2 bzw. 2A erläutert.

Das Polsterteil 4 umfasst im Wesentlichen eine mehrteilige Polsterbezugeinrichtung 15, welche aus einem Polsterbezugmittenelement 16, einem rechten Polsterbezugseitenelement 17 und einem linken Polsterbezugseitenelement 18 besteht (siehe insbesondere Figur 2). Die beiden Polsterbezugseitenelemente 17 und 18 schließen hierbei in Sitzrichtung 19 gesehen jeweils radial 20 außen seitlich an das Polsterbezugmittenelement 16 an.

Hierbei ist das rechte Polsterbezugseitenelement 17 in einem rechten Nahtbereich 21 mit dem Polsterbezugmittenelement 16 verbunden und das linke Polsterbezugsseitenelement 18 ist in einem linken Nahtbereich 22 mit dem Polsterbezugmittenelement 16 fest verbunden (siehe Figur 2). Der rechte Nahtbereich 21 ist gemäß der Darstellung nach der Figur 4 detaillierter gezeigt und wird später stellvertretend für die beiden Nahtbereiche 21 und 22 noch genauer erläutert werden.

Das Polsterbezugmittenelement 16 ist von einem Polsterungskernelement 23 unterbaut, während das rechte Polsterbezugseitenelement 17 von einem rechten Polsterungsseitenelement 24 und das linke Polsterbezugseitenelement 18 von einem linken Polsterungsseitenelement 25 unterbaut sind.

Das mittig angeordnete Polsterungskernelement 23 und die beiden seitlich hierzu angeordneten Polsterungsseitenelemente 24 und 25 bilden zusammen eine Polsterungseinrichtung 26 des Polsterteils 4.

Des Weiteren weist das Polsterteil 4 eine Sperrschichtlage 30 auf, die sich im Wesentlichen durch ein mittig angeordnetes Sperrschichtelement 31, ein rechtes Sperrschichtlagenelement 32 und ein linkes Sperrschichtlagenelement 33 zusammensetzt, wobei das mittig angeordnete Sperrschichtlagenelement 31 an dem Polsterungskernelement 23, das rechte Sperrschichtlagenelement 32 an dem rechten Polsterungsseitenelement 24 und das linke Sperrschichtlagenelement 33 dementsprechend an das linke Polsterungsseitenelement 25 ankaschiert sind, und zwar an einer der mehrteiligen Polsterbezugeinrichtung 15 abgewandten Seite 34 der Sperrschichtlage 30.

An den Nahtbereichen 21 bzw. 22 ist das jeweilige rechte bzw. linke Sperrschichtlagenelement 32 bzw. 33 mit dem mittigen Sperrschichtlagenelement 31 durch Abdichtungsstreifenelemente 35 bzw. 36 miteinander verbunden, wobei der Aufbau dieser rechten und linken Abdichtungsstreifenelemente 35 bzw. 36 stellvertretend im Zusammenhang mit dem rechten Nahtbereich 21 (siehe Figur 4) detaillierter erläutert ist.

In vorteilhafter Weise ergeben sich durch diesen Aufbau des Polsterteils 4 an dem Polsterteil 4 zwei voneinander durch das Polsterungskernelement 23 beabstandete Funktionsbereiche 40 bzw. 41, die radial 20 außen an einem Mittenspiegelbereich 42 der Sitzfläche 6 anschließen.

Bezugnehmend auf das in der Figur 3 gezeigte alternative Sitzteil 2A wird an dieser Stelle ausdrücklich darauf hingewiesen, dass die beiden seitlichen Funktionsbereiche 40 und 41 besonders vorteilhaft über das rechte Sitzwangenpolsterteil 10 bzw. das linke Sitzwangenpolsterteil 11 gezogen werden können, da das Polsterteil 4 in diesen beiden Funktionsbereichen 40 und 41 ein wesentlich größeres Biegungsvermögen und Dehnungsvermögen aufweist als in seinem Mittenspiegelbereich 42. Dies liegt einerseits daran, dass die Polsterungsseitenelemente 17 und 18 jeweils eine Dicke 45 (hier nur beispielhaft beziffert, siehe Figur 4) aufweisen, welche geringer ist als eine Dicke 46 des Polsterungskernelementes 23. Andererseits liegt dies daran, dass die Polsterbezugseitenelemente 17 und 18 jeweils ein höheres Dehnungsvermögen aufweisen als das Polsterbezugmittenelement 16. In diesem Ausführungsbeispiel zeichnet sich das Polsterbezugmittenelement 16 durch ein Dehnungsvermögen von 10 % seiner Ursprungslänge auf, während die beiden Polsterbezugseitenelemente 17 bzw. 18 jeweils ein Dehnungsvermögen von 180 % ihrer jeweiligen Ursprungslänge aufweisen.

In dem jeweiligen Nahtbereich 21 bzw. 22 sind das Polsterbezugmittenelement 16 und die radial 20 seitlich angeordneten Polsterbezugseitenelemente 17 bzw. 18 zumindest teilweise in etwa rechtwinkelig zu der Sitzfläche 6 und parallel zueinander verlaufend aneinander anliegend angeordnet, wobei das Polsterbezugmittenelement 16 und die Polsterbezugseitenelemente 17 und 18 in den jeweiligen Nahtbereichen 21 bzw. 22 zumindest in diesem Ausführungsbeispiel durch eine Naht 47 miteinander vernäht sind.

Dadurch, dass das Polsterbezugmittelelement 16 bzw. die Polsterbezugseitenelemente 17 und 18 in etwa rechtwinkelig zu der Sitzfläche 6 verlaufend angeordnet sind, liegen einerseits ein Polsterbezugmittenelementschenkel 48 und andererseits ein Polsterbezugseitenelementschenkel 49 direkt aneinander.

Damit diese Schenkel 48 und 49 in dem jeweiligen Nahtbereich 21 bzw. 22 zusätzlich stabilisiert werden können, ist an dem Polsterungskernelement 23 ein Polsterungskernelementanlagesteg 50 und an dem rechten Polsterungsseitenelement 24 ein Polsterungskernelementanlagesteg 51 vorgesehen, so dass der Polsterbezugmittenelementschenkel 48 und der Polsterbezugseitenelementschenkel 49 in dem jeweiligen Nahtbereich 21 bzw. 22 vorteilhaft gehalten sind.

Das Polsterbezugmittenelement 16 ist auf Seiten der Sperrschichtlage 30 in etwa u-förmig ausgestaltet. Dadurch gestaltet es einen der Sperrschichtlage 30 zugewandten rinnenartigen Einlegebereich 52 aus, in welchem das Polsterungskernelement 23 angeordnet ist.

Um an den Nahtbereichen 21 bzw. 22 die Abdichtungsstreifenelemente 35 bzw. 36 insbesondere an dem Polsterungskernelementanlagesteg 50 und an den Polsterungsseitenelementanlagestege 51 vorteilhaft auf die jeweiligen Sperrsichtlagenelemente 31, 32, bzw. 33 anbringen zu können, sind die Abdichtungsstreifenelemente 35 und 36 in diesem Ausführungsbeispiel jeweils mehrteilig ausgestaltet, wobei jedes der Abdichtungsstreifenelemente 35 und 36 aus einem ersten Streifenabschnitt 53, einem zweiten Streifenabschnitt 54 und einem dritten Streifenabschnitt 55 bestehen. Hierdurch können vorteilhafter Weise eventuell vorhandene Höhendifferenzen an den Anlagestegen 50 und 51 (siehe insbesondere Figur 4) besonders gut ausgeglichen werden, um eine besonders innige Verbindung an den einzelnen Sperrschichtlagenelementen 31, 32 und 33 und den Abdichtungsstreifenelementen 35 und 36 garantieren zu können.

Das derart bisher beschriebene Polsterteil 4 wird darüber hinaus an den Sperrschichtlagenelementen 31, 32, 33 und den Abdichtungsstreifenelementen 35 und 36 mit einem Hauptpolsterelement 60 hinterschäumt (siehe Figuren 1 und 2). Insofern ist das Hauptpolsterelement 60 durch die Sperrschichtlage 30 von der mehrteiligen Polsterbezugeinrichtung 15 und der Polsterungseinrichtung 26 räumlich getrennt an dem Polsterteil 4 angeordnet.

Wie im Wesentlichen ebenfalls aus der Figur 3 gut ersichtlich ist, können sich die Polsterbezugseitenelemente 17 bzw. 18 in Längsrichtung des Sitzteils 2 bzw. 2A erstrecken und vorteilhafter Weise an bzw. oberhalb der Sitzflächenwangenpolsterteile 10 bzw. 11 des Fahrzeugsitzes 1 angeordnet sein.

Insofern sind hierbei die Polsterbezugseitenelemente 17 bzw. 18 ausgehend von einer im Wesentlichen planen Sitzfläche 6 oberseitig in dieser planen Sitzfläche 6 nach schräg oben und anschließend nach unten gebogen weiter runterwärts bis unterseitig der planen Sitzfläche 6 verlaufend angeordnet.

Es versteht sich, dass es sich bei den erläuterten Ausführungsbeispielen lediglich um eine erste Ausgestaltung des erfindungsgemäßen Fahrzeugsitzes handelt. Insofern beschränkt sich die Ausgestaltung der Erfindung nicht allein auf dieses Ausführungsbeispiel.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Sitzteil
- 2A: alternatives Sitzteil
- 3: Rückenlehnenteil
- 4: Polsterteil des Sitzteils
- 5: Polsterteil des Rückenlehnenteils
- 6: Sitzfläche des Sitzteils
- 7: Sitzfläche des Rückenlehnenteils
- 8: rechtes Rückenlehnenwangenpolsterteil
- 9: linkes Rückenlehnenwangenpolsterteil
- 10: rechtes Sitzwangenpolsterteil
- 11: linkes Sitzwangenpolsterteil
- 15: Polsterbezugeinrichtung
- 16: Polsterbezugmittenelement
- 17: rechtes Polsterbezugseitenelement
- 18: linkes Polsterbezugseitenelement
- 19: Sitzrichtung
- 20: radial
- 21: rechter Nahtbereich
- 22: linker Nahtbereich
- 23: Polsterungskernelement
- 24: rechtes Polsterungsseitenelement
- 25: linkes Polsterungsseitenelement
- 26: Polsterungseinrichtung
- 30: Sperrschichtlage
- 31: mittiges Sperrschichtlagenelement
- 32: rechtes Sperrschichtlagenelement
- 33: linkes Sperrschichtlagenelement
- 34: abgewandte Seite
- 35: rechtes Abdichtungsstreifenelement
- 36: linkes Abdichtungsstreifenelement
- 40: rechter Funktionsbereich
- 41: linker Funktionsbereich
- 42: Mittenspiegelbereich
- 45: Polsterungsseitenelementdicke
- 46: Polsterungskernelementdicke
- 47: Naht
- 48: Polsterbezugmittenelementschenkel
- 49: Polsterbezugseitenelementschenkel
- 50: Polsterungskernelementanlagesteg
- 51: Polsterungsseitenelementanlagesteg
- 52: Einlegebereich
- 53: erster Streifenabschnitt
- 54: zweiter Streifenabschnitt
- 55: dritter Streifenabschnitt
- 60: Hauptpolsterelement
- 61: Längsrichtung

## Patentansprüche

1. Fahrzeugsitz (1) mit einem Sitzteil (2), mit einem Rückenlehnenteil (3) und mit einem Polsterteil (4, 5) zum Polstern einer Sitzfläche (6, 7) des Sitzteils (2, 2A), bei welchem das Polsterteil (4, 5) eine Polsterbezugeinrichtung (15), eine Polsterungseinrichtung (26), eine Sperrschichtlage (30) sowie ein Hauptpolsterelement umfasst, und bei welchem das Hauptpolsterelement (60) durch die Sperrschichtlage (30) von der Polsterbezugeinrichtung (15) und der Polsterungseinrichtung (26) räumlich getrennt angeordnet ist,
**dadurch gekennzeichnet, dass**
die Polsterbezugeinrichtung (15) und die Polsterungseinrichtung (26) in Sitzrichtung (19) gesehen quer zur Sitzfläche (6, 7) und entlang der Sitzfläche (6, 7) derart mehrteilig ausgestaltet sind, dass das Polsterteil (4, 5) radial (20) außen zwei durch einen Mittenspiegelbereich (42) voneinander beabstandete seitliche Funktionsbereiche (40, 41) aufweist, wobei die seitlichen Funktionsbereiche (40, 41) jeweils in einem Nahtbereich (21, 22) an dem Mittenspiegelbereich (42) befestigt sind.

2. Fahrzeugsitz (1) nach Anspruch 1,
**dadurch gekennzeichnet, dass**
die mehrteilige Polsterbezugeinrichtung (15) ein Polsterbezugmittenelement (16) und in Sitzrichtung (19) gesehen radial (20) außen hierzu zwei seitlich angeordnete Polsterbezugseitenelemente (17, 16) umfasst, welche mit dem Polsterbezugmittenelement (16) jeweils an den Nahtbereichen (21, 22) fest verbunden sind, wobei das Polsterbezugmittenelement (16) von einem Polsterungskernelement (23) der Polsterungseinrichtung (26) und die Polsterbezugseitenelemente (17, 18) jeweils von einem Polsterungsseitenelement (24, 25) der Polsterungseinrichtung (26) unterbaut sind.

3. Fahrzeugsitz (1) nach Anspruch 2,
**dadurch gekennzeichnet, dass**
das Polsterungskernelement (23) und die Polsterungsseitenelemente (24, 25) an ihrer der mehrteiligen Polsterbezugeinrichtung (15) abgewandten Seite (34) jeweils ein Sperrschichtlagenelement (31, 32, 33) aufweisen, wobei die Sperrschichtlagenelemente (31, 32, 33) an den Nahtbereichen (21, 22) jeweils mit entlang den Nahtbereichen (21, 22) verlaufenden Abdichtungsstreifenelementen (35, 36) miteinander verbunden sind.

4. Fahrzeugsitz (1) nach einem der Ansprüche 1 bis 3,
**dadurch gekennzeichnet, dass**
ein Polsterbezugmittenelement (16) der mehrteiligen Polsterbezugeinrichtung (15) und radial (20) hierzu seitlich angeordneten Polsterbezugseitenelemente (17, 18) der mehrteiligen Polsterbezugeinrichtung (15) an den jeweiligen Nahtbereichen (21, 22) zumindest teilweise in etwa rechtwinkelig zu der Sitzfläche (6, 7) und parallel zueinander verlaufend aneinander anliegend angeordnet sind, wobei das Polsterbezugmittenelement (16) und die Polsterbezugseitenelemente (17, 18) in den jeweiligen Nahtbereichen (21, 22) miteinander vernäht oder miteinander thermisch verschweißt sind.

5. Fahrzeugsitz (1) nach einem der Ansprüche 1 bis 4,
**dadurch gekennzeichnet, dass**
ein Polsterbezugmittenelement (16) der mehrteiligen Polsterbezugeinrichtung (15) auf Seiten der Sperrschichtlage (30) in etwa u-förmig ausgestaltet ist und dadurch einen der Sperrschichtlage (30) zugewandten rinnenartigen Einlegebereich (52) ausgestaltet, in welchem ein Polsterungskernelement (23) der mehrteiligen Polsterungseinrichtung (26) angeordnet ist.

6. Fahrzeugsitz (1) nach einem der Ansprüche 1 bis 5,
**dadurch gekennzeichnet,dass**
Polsterungsseitenelemente (24, 25) der mehrteiligen Polsterungseinrichtung (26) jeweils eine Dicke (45) aufweisen, welche geringer ist als eine Dicke (46) eines Polsterungskernelementes (23) der mehrteiligen Polsterungseinrichtung (26), wodurch das Polsterteil (4, 5) radial (20) außen seitlich angeordnete Funktionsbereiche (40, 41) aufweist, welche ein höheres Biegungsvermögen und/oder ein höheres Dehnungsvermögen aufweisen als das Polsterteil (4, 5) im Bereich des Polsterungskernelement (23).

7. Fahrzeugsitz (1) nach einem der Ansprüche 1 bis 6,
**dadurch gekennzeichnet, dass**
Polsterbezugseitenelemente (17, 18) der mehrteiligen Polsterbezugeinrichtung (15) jeweils ein höheres Dehnungsvermögen aufweisen als ein Polsterbezugmittenelement (16) der mehrteiligen Polsterbezugeinrichtung (15), wobei insbesondere die Polsterbezugseitenelemente (17, 18) jeweils ein Dehnungsvermögen von 40% bis 220%, vorzugsweise von 60% bis 180%, ihrer Ursprungslängen und/oder das Polsterbezugmittenelement (16) ein Dehnungsvermögen von 1% bis 220%, vorzugsweise von 10% bis 60%, seiner Ursprungslänge aufweisen.

8. Fahrzeugsitz (1) nach einem der Ansprüche 1 bis 7,
**dadurch gekennzeichnet, dass**
Polsterbezugseitenelemente (17, 18) der mehrteiligen Polsterbezugeinrichtung (15) sich in Längsrichtung (61) des Sitzteils (2, 2A) erstreckend und an bzw. oberhalb Sitzflächenwangenpolsterteilen (10, 11) des Fahrzeugsitzes (1) angeordnet sind.

9. Fahrzeugsitz (1) nach einem der Ansprüche 1 bis 8,
**dadurch gekennzeichnet, dass**
Polsterbezugseitenelemente (17, 18) der mehrteiligen Polsterbezugeinrichtung (15) ausgehend von einer im Wesentlichen planen Sitzfläche (6, 7) oberseitig dieser planen Sitzfläche (6, 7) nach oben und anschießend nach unten gebogen weiter runterwärts bis unterseitig der planen Sitzfläche (6, 7) verlaufend angeordnet sind.

10. Fahrzeugsitz (1) nach einem der Ansprüche 1 bis 9,
**dadurch gekennzeichnet, dass**
sowohl ein Polsterungskernelement (23) der mehrteiligen Polsterungseinrichtung (26) als auch Polsterungsseitenelemente (24, 25) der mehrteiligen Polsterungseinrichtung (26) an ihren jeweils unmittelbar gegenüberliegenden Seiten jeweils eine Anlageeinrichtung (50, 51) aufweisen, zwischen denen ein Polsterbezugmittenelement (16) der mehrteiligen Polsterbezugeinrichtung (15) und ein jeweiliges Polsterbezugseitenelement (17, 18) der mehrteiligen Polsterbezugeinrichtung (15) zumindest teilweise angeordnet sind, wobei insbesondere die jeweilige Anlageeinrichtung (50, 51) durch eine Materialüberhöhung an dem Polsterungskernelement (23) bzw. an den Polsterungsseitenelementen (24, 25) ausgestaltet sind.

## Claims

1. Vehicle seat (1) comprising a seat part (2), comprising a backrest part (3) and comprising a cushion part (4, 5) for cushioning a sitting surface (6, 7) of the seat part (2, 2A), in which the cushion part (4, 5) comprises a cushion covering (15), a cushioning means (26), a barrier layer (30) and a main cushion element, and in which the main cushion element (60) is arranged so as to be spatially separated by the barrier layer (30) from the cushion covering (15) and from the cushioning means (26),
**characterised in that**,
viewed in the sitting direction (19), the cushion covering (15) and the cushioning means (26) are formed in a multipart manner transversely to the sitting surface (6, 7) and along the sitting surface (6, 7) in such a way that the cushion part (4, 5) comprises radially (20) outside two lateral functional regions (40, 41) which are spaced apart by a central panel region (42), the lateral functional regions (40, 41) each being fastened to the central panel region (42) in a seam region (21, 22).

2. Vehicle seat (1) according to claim 1,
**characterised in that**
the multipart cushion covering (15) comprises a cushion cover central element (16) and two cushion cover side elements (17, 18) which are arranged laterally when viewed in the sitting direction (19) radially (20) outside thereto, which side elements are rigidly connected to the cushion cover central element (16) at the respective seam regions (21, 22), the cushion cover central element (16) being supported by a cushion core element (23) of the cushioning means (26) and the cushion cover side elements (17, 18) each being supported by a cushion side element (24, 25) of the cushioning means (26).

3. Vehicle seat (1) according to claim 2,
**characterised in that**
the cushion core element (23) and the cushion side elements (24, 25) each have a barrier layer element (31, 32, 33) on the side (34) thereof facing away from the multipart cushion covering (15), the barrier layer elements (31, 32, 33) in the seam regions (21, 22) being interconnected in each case by means of sealing strip elements (35, 36) extending along the seam regions (21, 22).

4. Vehicle seat (1) according to any of claims 1 to 3,
**characterised in that**
a cushion cover central element (16) of the multipart cushion covering (15) and cushion cover side elements (17, 18) of the multipart cushion covering (15) which are arranged laterally and radially (20) to said cushion cover central element are arranged so as to extend in parallel and be adjacent to one another approximately at right angles to the sitting surface (6, 7) in the respective seam regions (21, 22) at least in part, the cushion cover central element (16) and the cushion cover side elements (17, 18) being sewn together or thermally welded to one another in the respective seam regions (21, 22).

5. Vehicle seat (1) according to any of claims 1 to 4,
**characterised in that**
a cushion cover central element (16) of the multipart cushion covering (15) is configured so as to be approximately U-shaped on the sides of the barrier layer (30) and thus forms an annular insertion region (52) facing the barrier layer (30), in which region a cushion core element (23) of the multipart cushioning means (26) is arranged.

6. Vehicle seat (1) according to any of claims 1 to 5,
**characterised in that**
cushion side elements (24, 25) of the multipart cushioning means (26) each have a thickness (45) which is less than a thickness (46) of a cushion core element (23) of the multipart cushioning means (26), the cushion part (4, 5) thus comprising functional regions (40, 41) arranged laterally and radially (20) to the outside, which have a greater bending and/or stretching capacity than the cushion part (4, 5) in the region of the cushion core element (23).

7. Vehicle seat (1) according to any of claims 1 to 6,
**characterised in that**
cushion cover side elements (17, 18) of the multipart cushion covering (15) each have a greater stretching capacity than a cushion cover central element (16) of the multipart cushion covering (15), the cushion cover side elements (17, 18) in particular each having a stretching capacity of from 40 % to 220 %, preferably from 60 % to 180 %, of the original lengths thereof and/or the cushion cover central element (16) having a stretching capacity of from 1 % to 220 %, preferably from 10 % to 60 %, of the original length thereof.

8. Vehicle seat (1) according to any of claims 1 to 7,
**characterised in that**
cushion cover side elements (17, 18) of the multipart cushion covering (15) are arranged so as to extend in the longitudinal direction (61) of the seat part (2, 2A) and on or above the cushion parts (10, 11) of the sitting surface cheeks of the vehicle seat (1).

9. Vehicle seat (1) according to any of claims 1 to 8,
**characterised in that**
cushion cover side elements (17, 18) of the multipart cushion covering (15) are arranged so as to extend upwards, starting from a substantially planar sitting surface (6, 7), on the upper side of said planar sitting surface (6, 7), and subsequently curve downwards to the lower side of the planar sitting surface (6, 7).

10. Vehicle seat (1) according to any of claims 1 to 9,
**characterised in that**
both a cushion core element (23) of the multipart cushioning means (26) and cushion side elements (24, 25) of the multipart cushioning means (26) each comprise a contact means (50, 51) on their respective directly opposite sides, between which contact means a cushion cover central element (16) of the multipart cushion covering (15) and a respective cushion cover side element (17, 18) of the multipart cushion covering (15) are arranged at least in part, in particular the respective contact means (50, 51) being formed on the cushion core element (23) or on the cushion side elements (24, 25) respectively by a material elevation.

## Revendications

1. Siège de véhicule (1) avec une partie d'assise (2), avec une partie de dossier (3) et avec une pièce de rembourrage (4, 5) pour le rembourrage d'une surface d'assise (6, 7) de la partie de l'assise (2, 2A), dans lequel la pièce de rembourrage (4, 5) comprend un dispositif de revêtement de rembourrage (15), un dispositif de rembourrage (26), une strate de couche de barrière (30) et un élément de rembourrage principal, et dans lequel l'élément de rembourrage principal (60) est disposé séparé spatialement du dispositif de revêtement de rembourrage (15) et du dispositif de rembourrage (26) par la strate de couche de barrière (30),
**caractérisé en ce que**
le dispositif de revêtement de rembourrage (15) et le dispositif de rembourrage (26), vu dans la direction du siège (19), sont constitués transversalement à la surface d'assise (6, 7) et le long de la surface d'assise (6, 7) en plusieurs parties de telle sorte que la pièce de rembourrage (4, 5) présente, à l'extérieur radialement (20), deux zones fonctionnelles (40, 41) latérales espacées l'une de l'autre par une zone symétrique centrale (42), les zones fonctionnelles (40, 41) latérales étant fixées respectivement dans une zone de couture (21, 22) sur la zone symétrique centrale (42).

2. Siège de véhicule (1) selon la revendication 1,
**caractérisé en ce que**
le dispositif de revêtement de rembourrage (15) en plusieurs parties comprend un élément central de revêtement de rembourrage (16) et, vu dans la direction du siège (19), à l'extérieur radialement, deux éléments latéraux de revêtement de rembourrage (17, 18) disposés latéralement par rapport à cette direction, qui sont raccordés fixement avec l'élément central de revêtement de rembourrage (16) respectivement sur les zones de couture (21, 22), l'élément central de revêtement de rembourrage (16) étant étayé par un élément de noyau de rembourrage (23) du dispositif de rembourrage (26), et les éléments latéraux de revêtement de rembourrage (17, 18) étant étayés respectivement par un élément latéral de rembourrage (24, 25) du dispositif de rembourrage (26).

3. Siège de véhicule (1) selon la revendication 2,
**caractérisé en ce que**
l'élément de noyau de rembourrage (23) et les éléments latéraux de rembourrage (24, 25) présentent, sur leur côté (34) opposé au dispositif de revêtement de rembourrage (15) en plusieurs parties, respectivement un élément de strate de couche de barrière (31, 32, 33), les éléments de strate de couche de barrière (31, 32, 33) étant, sur les zones de couture (21, 22), raccordés les uns aux autres respectivement par des éléments de bande d'étanchéité (35, 36) placés le long des zones de couture (21, 22).

4. Siège de véhicule (1) selon l'une des revendications 1 à 3,
**caractérisé en ce**
**qu'**un élément central de revêtement de rembourrage (16) du dispositif de revêtement de rembourrage (15) en plusieurs parties et des éléments latéraux de revêtement de rembourrage (17, 18), disposés radialement (20) et latéralement par rapport à l'élément central, du dispositif de revêtement de rembourrage (15) en plusieurs parties sont disposés de façon réciproquement adjacente sur les zones de couture (21, 22) au moins partiellement à peu près à angle droit par rapport à la surface d'assise (6, 7) et parallèlement entre eux, l'élément central de revêtement de rembourrage (16) et les éléments latéraux de revêtement de rembourrage (17, 18) étant, dans les zones de couture (21, 22) respectives, cousus ensemble ou assemblés thermiquement par soudage.

5. Siège de véhicule (1) selon une des revendications 1 à 4,
**caractérisé en ce**
**qu'**un élément central de revêtement de rembourrage (16) du dispositif de revêtement de rembourrage (15) en plusieurs parties est, sur les côtés de la strate de couche de barrière (30), constitué à peu près en forme de U et constitue de ce fait une zone d'insertion (52) du type rigole qui est tournée vers la strate de couche de barrière (30) et dans laquelle est disposé un élément de noyau de rembourrage (23) du dispositif de rembourrage (26) en plusieurs parties.

6. Siège de véhicule (1) selon une des revendications 1 à 5,
**caractérisé en ce que**
des éléments latéraux de rembourrage (24, 25) du dispositif de rembourrage (26) en plusieurs parties présentent respectivement une épaisseur (45) qui est plus faible qu'une épaisseur (46) d'un élément de noyau de rembourrage (23) du dispositif de rembourrage (26) en plusieurs parties, ce qui fait que la pièce de rembourrage (4, 5) présente à l'extérieur radialement (20) des zones fonctionnelles (40, 41) disposées latéralement qui présentent une flexibilité plus élevée et/ou une extensibilité plus élevée que la pièce de rembourrage (4, 5) dans la zone de l'élément de noyau de rembourrage (23).

7. Siège de véhicule (1) selon une des revendications 1 à 6,
**caractérisé en ce que**
des éléments latéraux de revêtement de rembourrage (17, 18) du dispositif de revêtement de rembourrage (15) en plusieurs parties présentent respectivement une extensibilité plus élevée qu'un élément central de revêtement de rembourrage (16) du dispositif de revêtement de rembourrage (15) en plusieurs parties, les éléments latéraux de revêtement de rembourrage (17, 18) en particulier présentant une extensibilité de 40 % à 220 %, de préférence de 60 % à 180 %, par rapport à leurs longueurs initiales, et/ou l'élément central de revêtement de rembourrage (16) présentant une extensibilité de 1% à 220 %, de préférence de 10 % à 60%, par rapport à sa longueur initiale.

8. Siège de véhicule (1) selon une des revendications 1 à 7,
**caractérisé en ce que**
des éléments latéraux de revêtement de rembourrage (17, 18) du dispositif de revêtement de rembourrage (15) en plusieurs parties sont disposés en s'étendant dans la direction longitudinale (61) de la partie d'assise (2, 2A) et sur, ou respectivement au-dessus de parties de rembourrage des joues (10, 11) de la surface d'assise du siège de véhicule (1).

9. Siège de véhicule (1) selon une des revendications 1 à 8,
**caractérisé en ce que**
des éléments latéraux de revêtement de rembourrage (17, 18) du dispositif de revêtement de rembourrage (15) en plusieurs parties, en partant d'une surface d'assise (6, 7) essentiellement plane sur le côté supérieur de cette surface d'assise (6, 7) plane, sont disposés orientés vers le haut et puis courbés vers le bas plus loin en descendant jusqu'en dessous de la surface d'assise (6, 7) plane.

10. Siège de véhicule (1) selon une des revendications 1 à 9,
**caractérisé en ce qu'**
aussi bien un élément de noyau de rembourrage (23) du dispositif de rembourrage (26) en plusieurs parties que des éléments latéraux de rembourrage (24, 25) du dispositif de rembourrage (26) en plusieurs parties présentent, sur leurs côtés respectivement directement opposés, chacun un dispositif d'appui (50, 51) entre lesquels sont au moins partiellement disposés un élément central de revêtement de rembourrage (16) du dispositif de revêtement de rembourrage (15) en plusieurs parties et un élément latéral de revêtement de rembourrage (17, 18) respectif du dispositif de revêtement de rembourrage (15) en plusieurs parties, en particulier chaque dispositif d'appui (50, 51) étant constitué par une surépaisseur de matériau sur l'élément de noyau de rembourrage (23) ou respectivement sur les éléments latéraux de rembourrage (24, 25).
